# EUROPÄISCHE PATENTANMELDUNG

(11) **EP 4 512 690 A1**
(43) Veröffentlichungstag der Anmeldung: **26.02.2025**
(21) Anmeldenummer: 23193082.7
(22) Anmeldetag: 24.08.2023
(51) Int. Cl.: B62B 5/00, B62B 5/08

(54) **ANORDNUNG MIT EINER ANTRIEBSEINHEIT FÜR EINEN HANDWAGEN**

(71) Anmelder: Fuxtec GmbH, 71083 Herrenberg (DE)
(72) Erfinder: Böckenhoff, Wenzel, 82327 Tutzing (DE)
(74) Vertreter: Ruckh, Rainer Gerhard

(57) **Zusammenfassung**

Die Erfindung betrifft eine Anordnung (1) mit einem Handwagen (2) und mit einer Antriebseinheit (3), die wenigstens ein mit einem elektrischen Antrieb (7) angetriebenes Rad (6) und eine mechanische Schnittstelle (27), die zur Verbindung mit dem Handwagen (2) ausgebildet ist, aufweist. Der elektrische Antrieb (7) ist in einer spritzwasserdichten Wanne (4) gelagert, deren offene Oberseite mit einem Trittbrett (5) spritzwasserdicht abgeschlossen ist. Die spritzwasserdichte Wanne (4) weist Aufnahmen (18) für eine Drehlagerung des angetriebenen Rads (6) auf. Weiterhin ist eine Betriebsbremse (12) vorhanden.

## Beschreibung

Die Erfindung betrifft eine Anordnung mit einer Antriebseinheit für einen Handwagen.

Handwagen, auf welche sich die vorliegende Erfindung bezieht, können insbesondere von Bollerwagen gebildet sein. Derartige Bollerwagen weisen generell auf Rädern gelagerte Lastaufnahmemittel auf, die im Wesentlichen von einem Boden und daran gelagerten Geländerelementen bestehen. Ein derartiger Bollerwagen weist eine Deichsel oder einen Handgriff auf. Damit kann ein Benutzer den Bollerwagen schieben oder ziehen.

In dem Bollerwagen können Lasten mitgeführt werden. Auch ist es möglich Kinder in einem derartigen Bollerwagen zu transportieren.

Je nach Gewicht der auf dem Bollerwagen befindlichen Lasten und Personen ist ein großer Kraftaufwand der jeweiligen Bedienperson erforderlich, um den Bollerwagen fortzubewegen.

Aus der EP 3 838 713 A1 ist eine Antriebseinheit für einen Handwagen bekannt. Die Antriebseinheit ist mit einer mechanischen Schnittstelle zur Verbindung mit dem Handwagen, mit wenigstens einem Rad, welches mittels eines elektrischen Antriebs angetrieben ist, und mit einer Steuereinheit zur Steuerung des elektrischen Antriebs ausgebildet. Mit Bedienelementen sind durch deren Betätigung Steuerbefehle für die Steuereinheit generierbar.

Der Erfindung liegt die Aufgabe zugrunde eine Anordnung der eingangs genannten Art bereitzustellen, die eine hohe Funktionalität und Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Anordnung mit einem Handwagen und mit einer Antriebseinheit, die wenigstens ein mit einem elektrischen Antrieb angetriebenes Rad und eine mechanische Schnittstelle, die zur Verbindung mit dem Handwagen ausgebildet ist, aufweist. Der elektrische Antrieb ist in einer spritzwasserdichten Wanne gelagert, deren offene Oberseite mit einem Trittbrett spritzwasserdicht abgeschlossen ist. Die spritzwasserdichte Wanne weist Aufnahmen für eine Drehlagerung des angetriebenen Rads auf. Weiterhin ist eine Betriebsbremse vorhanden.

Ein erster wesentlicher Aspekt der Erfindung besteht darin, dass die Wanne mit dem Trittbrett eine spritzwasserdichte, gekapselte Einheit bildet, in der elektrische Antriebe und mit diesen alle Elektrik- und Elektronikkomponenten sicher gegen Kontakt mit Wasser und Feuchtigkeit geschützt sind, wodurch eine ausfallsichere Lagerung der Elektrik- und Elektronikkomponenten der Antriebseinheit gewährleistet ist.

Zu den Elektrik- und Elektronikkomponenten gehören neben dem elektrischen Antrieb vorteilhaft eine Steuereinheit zur Steuerung des elektrischen Antriebs sowie eine autarke Energieversorgung, die vorteilhaft in Form von Akkumulatoren ausgebildet ist.

Ein weiterer wesentlicher Sicherheitsaspekt besteht darin, dass die Anordnung eine Betriebsbremse aufweist. Eine derartige Betriebsbremse erfüllt gegenüber einfachen Bremsen ein erhöhtes Sicherheitsniveau.

Durch die vorhandene Betriebsbremse in Kombination mit der spritzwasserdichten Kapselung der Elektrik- und Elektronikkomponenten der Antriebseinheit sind die Voraussetzungen für eine sicherheitstechnische Zertifizierung gegeben. Die erfindungsgemäße Anordnung kann damit für Handwagen eingesetzt werden, wo erhöhte Sicherheitsanforderungen erfüllt sein müssen.

Vorteilhaft kann dabei der Handwagen ein Bollerwagen und insbesondere ein Kinderwagen sein, wo eine Funktionssicherheit eine besonders große Rolle spielt.

Ein weiterer sicherheitsrelevanter Aspekt wird für die Ansteuerung der den elektrischen Antrieb steuernden Steuereinheit dadurch erzielt, dass die Steuereinheit über leitungsgebundene Anschlussmittel mit einer Bedieneinheit verbunden ist. Die Bedieneinheit ist zur Eingabe von Steuerbefehlen für den Antrieb ausgebildet.

Der Datenaustausch über leitungsgebundene Anschlussmittel ist erheblich ausfallsicherer als berührungslos arbeitende Schnittstellen.

Die leitungsgebundenen Anschlussmittel sind vorteilhaft von einem Kabel gebildet, das die Bedieneinheit mit der Steuereinheit verbindet. Im einfachsten Fall kann als Bedieneinheit ein Hebel oder Knopf vorgesehen sein, mit dem der Widerstand eines Potentiometers geändert wird, welches als Ansteuersignal für die Steuereinheit dient.

Gemäß einer vorteilhaften Ausgestaltung ist die Betriebsbremse eine mechanische Bremse.

Die Betriebsbremse weist damit einen robusten ausfallsicheren Aufbau auf.

Vorteilhaft ist an zwei nicht angetriebenen Rädern des Handwagens jeweils eine Scheibenbremse angeordnet, die Bestandteil der Betriebsbremse ist.

Weiterhin weist die Betriebsbremse ein Bremsmodul mit Bedienelementen auf.

Die Scheibenbremsen werden über das Bremsmodul mechanisch betätigt. Hierzu ist vorteilhaft das Bremsmodul über jeweils einen Bowdenzug mit einer der Scheibenbremsen verbunden.

Damit wird eine einfache und ausfallsichere Betätigung der Scheibenbremsen ermöglicht, die ihrerseits zuverlässige Bremsmittel bilden.

Ein wesentlicher Aspekt besteht darin, dass die Betriebsbremse eine unabhängige separate Einheit bildet, wobei insbesondere die Betriebsbremse eine von Antriebsmitteln der Antriebseinheit unabhängige Einheit ist.

Die Antriebseinheit und die Betriebsbremse bilden nicht nur funktionell, sondern auch konstruktiv separate Einheiten. Insbesondere werden die Antriebseinheit und die Betriebsbremse unabhängig voneinander installiert. Die Betriebsbremse und die Antriebseinheit können somit auch als eigenständige Produkte gefertigt und vertrieben werden.

Die Scheibenbremsen der Betriebsbremse werden an nicht angetriebenen Rädern des Handwagens montiert und können dann mit dem Bremsmodul betätigt werden.

Die Antriebseinheit wird mittels der mechanischen Schnittstelle an den Handwagen angekoppelt, wobei der elektrische Antrieb über die Bedieneinheit betätigt werden kann.

Durch die Ausbildung der Bremse als unabhängige Einheit und insbesondere in Kombination mit der ausfallsicheren mechanischen Konstruktion und Betätigung erfüllt die Bremse die Anforderungen für eine Betriebsbremse, für die eine sicherheitstechnische Zertifizierung erlangt werden kann.

Gemäß einer besonders vorteilhaften Ausgestaltung ist bei der erfindungsgemä-ßen Betriebsbremse ein erstes Bedienelement zur Betätigung der Scheibenbremsen ausgebildet. Ein zweites Bedienelement ist zur Arretierung von Bremsstellungen der Scheibenbremsen ausgebildet.

Das erste Bedienelement kann von einem Hebel oder dergleichen gebildet sein, mit dem die den Scheibenbremsen zugeordneten Bowdenzüge betätigt werden, um die Bremswirkung einzuleiten oder aufzuheben.

Das zweite Bedienelement kann von einem Knopf gebildet sein, mit dem eine Bremsstellung der Scheibenbremsen oder allgemein der Bremselemente arretiert werden kann, wodurch die Betriebsbremse zu einer Feststellbremse weitergebildet wird. Die Arretierung wird mittels der Bowdenzüge auf die Scheibenbremsen übertragen.

Gemäß einer vorteilhaften Ausführungsform weist die mechanische Schnittstelle zwei Kopplungsmittel auf, die an einer feststehenden Achse des Handwagens montierbar sind.

Weiterhin weist die mechanische Schnittstelle eine mit der spritzwasserdichten Wanne gelenkig verbundene Platte auf, die mittels einer Gleitführung an einen Querträger des Handwagens ankoppelbar ist.

Mit der so ausgebildeten mechanischen Schnittstelle kann die Antriebseinheit schnell und werkzeuglos am Handwagen montiert werden, wobei insbesondere eine Montage an unterschiedlichen Handwagen möglich ist.

Vorteilhaft ist die spritzwasserdichte Wanne mittels einer federnden Gelenkverbindung mit der Platte verbunden.

Mittels der Federkräfte der federnden Gelenkverbindung wird ein gleichförmiger Anpressdruck des angetriebenen Rads der Antriebseinheit gegen eine Unterlage erzielt.

Die Erfindung wird im Folgenden anhand der Zeichnungen erläutert. Es zeigen:
- Figur 1:: Schematische Darstellung der erfindungsgemäßen Anordnung mit einer an einem Handwagen angebrachten Antriebseinheit sowie einer Betriebsbremse für den Handwagen.
- Figur 2:: Spritzwasserdichte Wanne der Antriebseinheit der Anordnung gemäß Figur 1 bei abgehobenem Trittbrett.
- Figur 3:: Detaildarstellung der Anordnung gemäß Figur 1 mit einem Rad des Handwagens und der Antriebseinheit
a) Draufsicht auf die Außenseite des Rads.
b) Draufsicht auf die Innenseite des Rads.
- Figur 4:: Einzeldarstellung eines Rads des Handwagens mit Komponenten einer Scheibenbremse.
- Figur 5:: Rückansicht der Anordnung gemäß Figur 3.
- Figur 6:: Schnittdarstellung der Anordnung gemäß Figur 5.
- Figur 7:: Variante der Anordnung der Figuren 5 und 6 mit Schiebern in ersten Endpositionen.
- Figur 8:: Anordnung gemäß Figur 7 mit den Schiebern in zweiten Endpositionen.

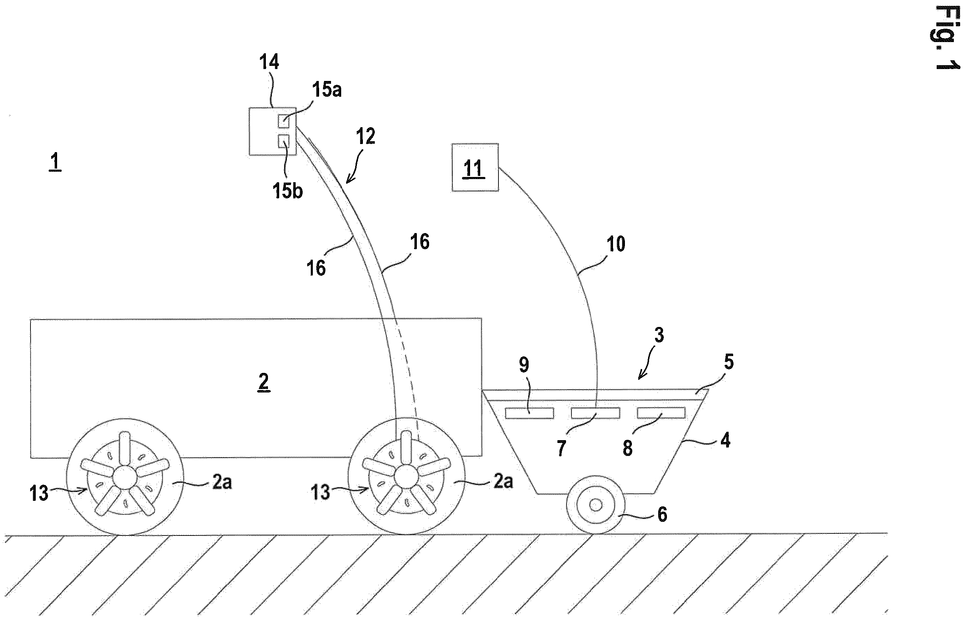

Figur 1 zeigt stark schematisiert ein Ausführungsbeispiel der erfindungsgemä-ßen Anordnung 1. Die Anordnung 1 umfasst einen Handwagen 2. Ein derartiger Handwagen 2 weist nicht angetriebene Räder 6 auf, d.h. der Handwagen 2 weist keine eigenen Antriebsmittel auf und wird von einer Person durch Schieben oder Ziehen fortbewegt. Der Handwagen 2 kann insbesondere von einem Bollerwagen oder einem Kinderwagen gebildet sein.

Die Anordnung 1 weist weiterhin eine Antriebseinheit 3 auf, die am Handwagen 2 mechanisch angekoppelt werden kann. Mittels der Antriebseinheit 3 wird der Handwagen 2 elektromotorisch angetrieben.

Die Antriebseinheit 3 weist eine spritzwasserdichte Wanne 4 auf, deren offene Oberseite mit einem Trittbrett 5 spritzwasserdicht verschlossen ist. Die spritzwasserdichte Wanne 4 bildet auch eine Drehlagerung für ein angetriebenes Rad 6 aus. Die spritzwasserdichte Wanne 4 und das Trittbrett 5 bestehen jeweils aus einem Kunststoff-Spritzgussteil. Mit der spritzwasserdichten Wanne 4 und dem Trittbrett 5 wird ein spritzwasserdichtes Gehäuse bereitgestellt, in dem die Elektrik- und Elektronikkomponenten der Antriebseinheit 3 integriert sind. Hierzu gehören ein elektrischer Antrieb 7, d.h. Elektromotor, eine Steuereinheit 8, die den elektrischen Antrieb 7 steuert, sowie Akkumulatoren 9 als autarke Energieversorgung. Die Steuereinheit 8 kann von einem Mikroprozessor oder dergleichen gebildet sein. Die einzelnen Elektrik- und Elektronikkomponenten sind über nicht dargestellte Kabel verbunden. Die Steuereinheit 8 ist über leitungsgebundene Anschlussmittel 10 mit einer Bedieneinheit 11 verbunden. Das leitungsgebundene Anschlussmittel 10 ist von einem Kabel gebildet. Die Bedieneinheit 11 weist einen Knopf oder dergleichen auf, mit dem der Widerstand eines Potentiometers geändert werden kann. Das Ausgangssignal des Potentiometers bildet ein Ansteuersignal für die Steuereinheit 8, die den elektrischen Antrieb 7 entsprechend steuert. Mit dem elektrischen Antrieb 7 wird das angetriebene Rad 6 bewegt, wobei über das Potentiometer Richtung und Drehgeschwindigkeit des angetriebenen Rads 6 vorgegeben wird.

Als weiteres, von der Antriebseinheit 3 unabhängiges Modul ist eine mechanische Betriebsbremse 12 vorgesehen. Die Betriebsbremse 12 umfasst an nicht angetriebenen Rädern 2a des Handwagens 2 angeordnete Scheibenbremsen 13, wobei im vorliegenden Fall an zwei gegenüberliegenden Rädern 2a jeweils eine Scheibenbremse 13 vorgesehen ist.

Die Betriebsbremse 12 umfasst weiterhin ein den Scheibenbremsen 13 zugeordnetes Bremsmodul 14 mit Bedienelementen 15a, 15b. Die Bedienelement 15a, 15b können in Form von Hebeln oder Knöpfen ausgebildet sein.

Ein erstes Bedienelement 15a dient zur Betätigung der Scheibenbremsen 13.

Ein zweites Bedienelement 15b dient zur Arretierung einer vorgegebenen Bremsstellung der Scheibenbremsen 13. Durch die Arretierung erfüllt die Betriebsbremse 12 die Funktion einer Feststellbremse.

Vom Bremsmodul 14 ist jeweils ein Bowdenzug 16 zu einer Scheibenbremse 13 geführt. Über den jeweiligen Bowdenzug 16 erfolgt sowohl die Betätigung der zugeordneten Scheibenbremse 13 als auch deren Arretierung.

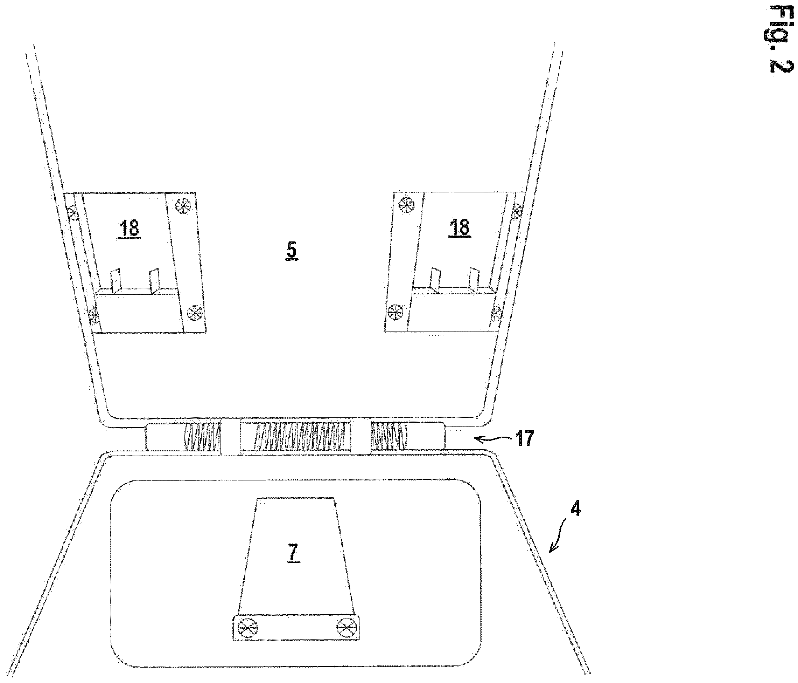

Figur 2 zeigt die spritzwasserdichte Wanne 4 bei hochgeklapptem Trittbrett 5. Das Trittbrett 5 ist mittels eines Gelenkmechanismus 17 an der spritzwasserdichten Wanne 4 schwenkbar gelagert.

An der Innenseite des Trittbretts 5 befinden sich zwei Aufnahmen 18 für die (in Figur 2 nicht dargestellten) Akkumulatoren 9.

Im oberen Bereich ist der elektrische Antrieb 7 mit der Steuereinheit 8 gelagert.

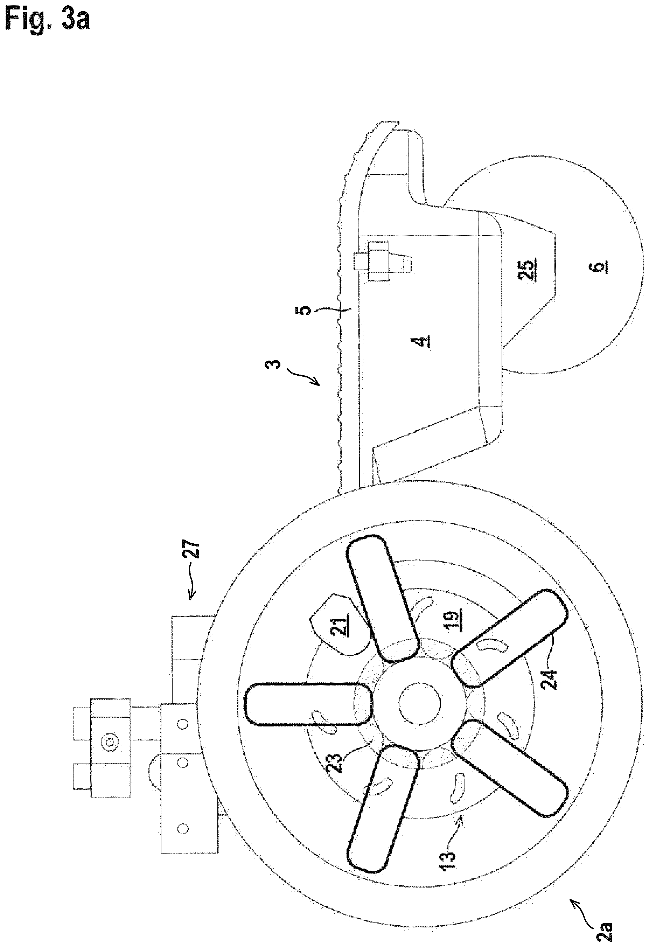

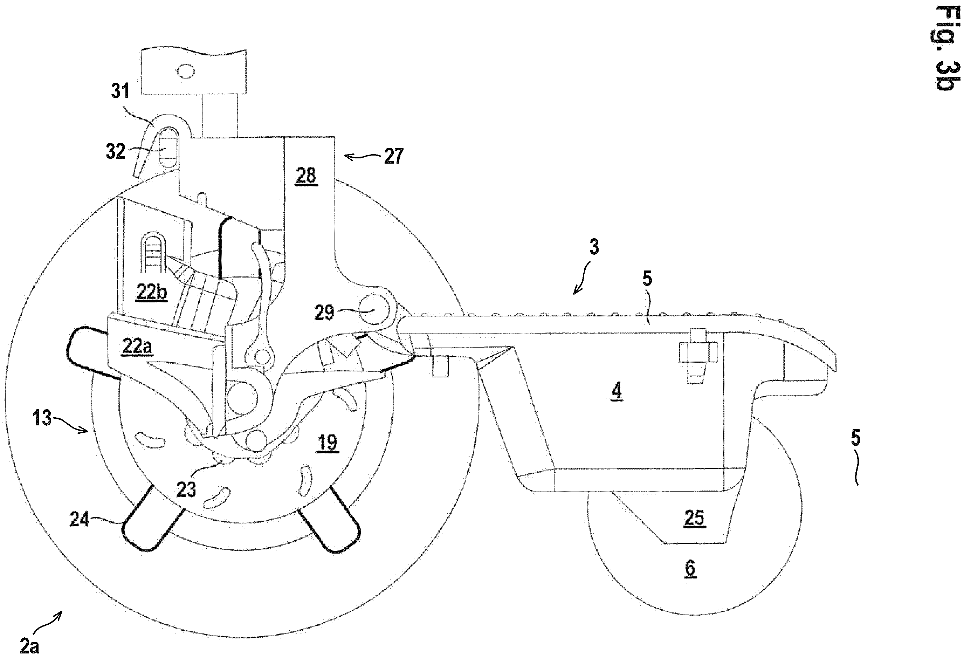

Die Figuren 3a, 3b zeigen ein Rad 2a des Handwagens 2 mit einer Scheibenbremse 13 und die an den Handwagen 2 angekoppelte Antriebseinheit 3, wobei Figur 3a die Außenseite und Figur 3b die Innenseite des Rads 2a zeigt.

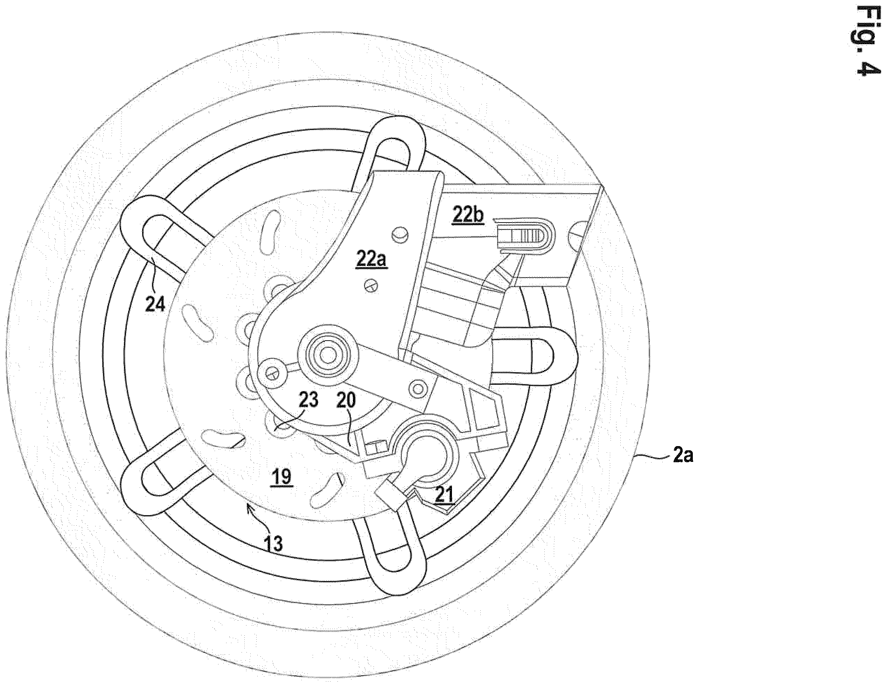

Figur 4 zeigt eine Einzeldarstellung des Rads 2a.

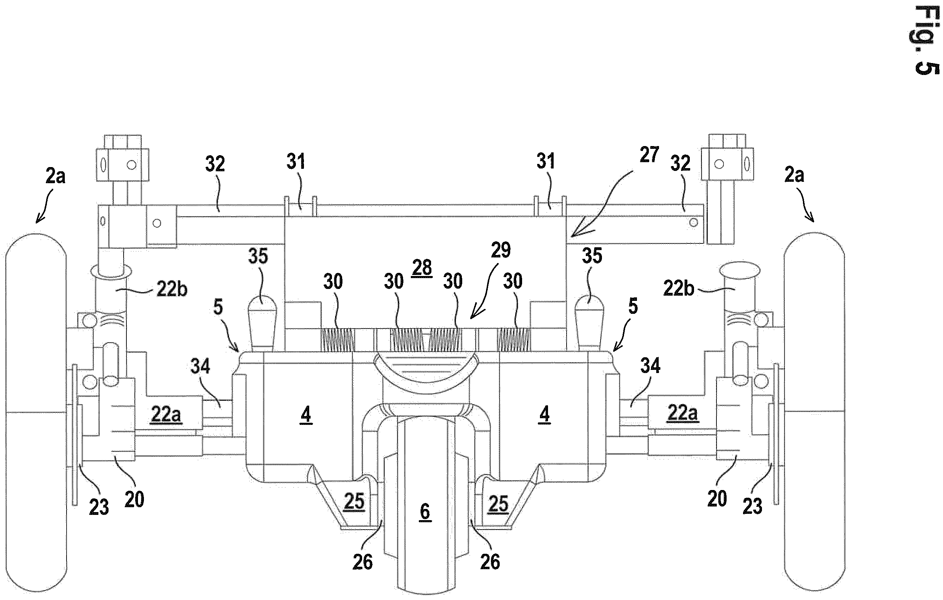

Figur 5 zeigt eine rückseitige Draufsicht der Detailanordnung gemäß den Figuren 3a, 3b

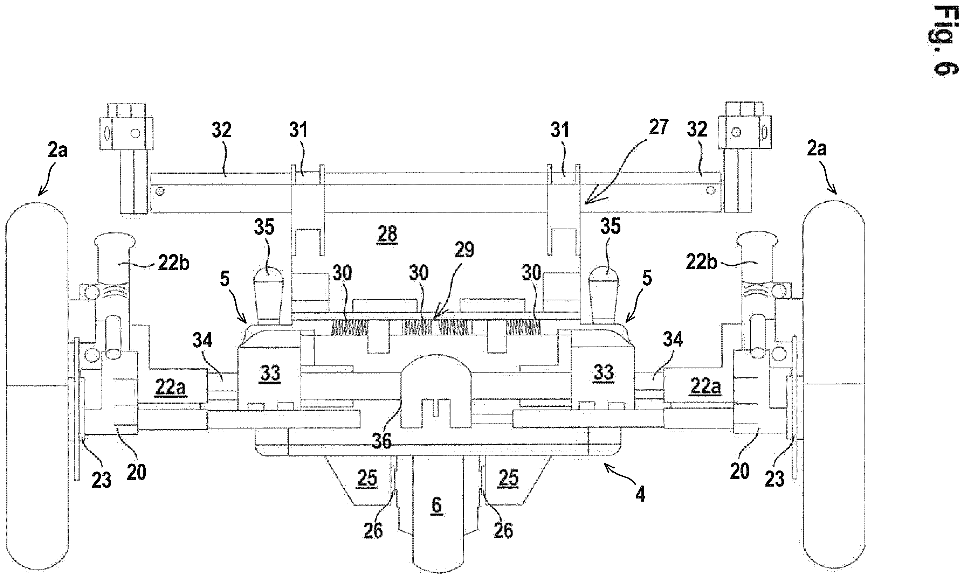

Figur 6 zeigt eine Querschnittsdarstellung der Detailanordnung von Figur 5.

Figur 4 zeigt, wie teilweise auch die Figuren 3a, 3b die Komponenten der Scheibenbremse 13, die bei abgenommenem Rad 2a am Handwagen 2 montiert wird. Jede Scheibenbremse 13 umfasst eine Bremsscheibe 19, einen Bremshalter 20 und einen Bremssattel 21.

Die Komponenten liegen zwischen dem Rad 2a und Führungskomponenten 22a, 22b des Handwagens 2, die zur Lagerung eines Handgriffs des Handwagens 2 dienen.

Die Scheibenbremse 13 wird mit einer Nabe 23 am Rad 2a festgeclipst, wobei Segmente der Nabe 23 hierzu durch Speichen 24 des Rads 2a geführt sind, wodurch die Nabe 23 am Rad 2a fest einrastet (Figur 3a).

Wie insbesondere die Figuren 3a, 3b, 5 und 6 zeigen, bildet die spritzwasserdichte Wanne 4 eine Drehlagerung für das mit dem elektrischen Antrieb 7 angetriebene Rad 6 aus. Hierzu sind an der Unterseite der spritzwasserdichten Wanne 4 Lagerelemente 25 vorgesehen, die Bestandteile der spritzwasserdichten Wanne 4 sind.

In den Lagerelementen 25 ist eine Welle 26 gelagert, an der das angetriebene Rad 6 drehbar gelagert ist (Figuren 5 und 6).

An die spritzwasserdichte Wanne 4 ist eine mechanische Schnittstelle 27 zum Anschluss der Antriebseinheit 3 gelenkig angebunden (Figuren 3a, 3b, 5, 6).

Die mechanische Schnittstelle 27 weist eine Platte 28 auf, die mittels einer Gelenkverbindung 29 mit der spritzwasserdichten Wanne 4 verbunden ist. Diese Gelenkverbindung 29 weist mehrere Federelemente 30 auf.

Am oberen Rand der Platte 28 befinden sich zwei Gleitführungen 31, die an einem Querträger 32 des Handwagens 2 eingehängt werden, um die mechanische Schnittstelle 27 an den Handwagen 2 anzukoppeln.

An der Platte 28 sind zwei identische Kopplungsmittel 33 gelagert (Figur 6). Zur weiteren Ankopplung der mechanischen Schnittstelle 27 an den Handwagen 2 werden diese Kopplungsmittel 33 auf einer feststehenden Achse 34 des Handwagens 2 gelagert. Zur Fixierung der Kopplungsmittel 33 an der Achse 34 weisen die Kopplungsmittel 33 an ihrer Oberseite jeweils einen Kipphebel 35 auf. An der Achse 34 ist als Bestandteil des Handwagens 2 ein Fusspedal 36 gelagert.

Die mechanischen Schnittstelle 27 bildet eine modulare Einheit, die eine Ankopplung an verschiedene Handwagen 2 ermöglicht. Die Federkräfte der Federlagerung sorgen für eine Stabilisierung der Gelenkverbindung 29 in einer Sollposition und sorgen für einen gleichbleibenden Anpressdruck auf einer Unterlage. Die Betriebsbremse 12 bildet eine vor der Antriebseinheit 3 unabhängige Einheit.

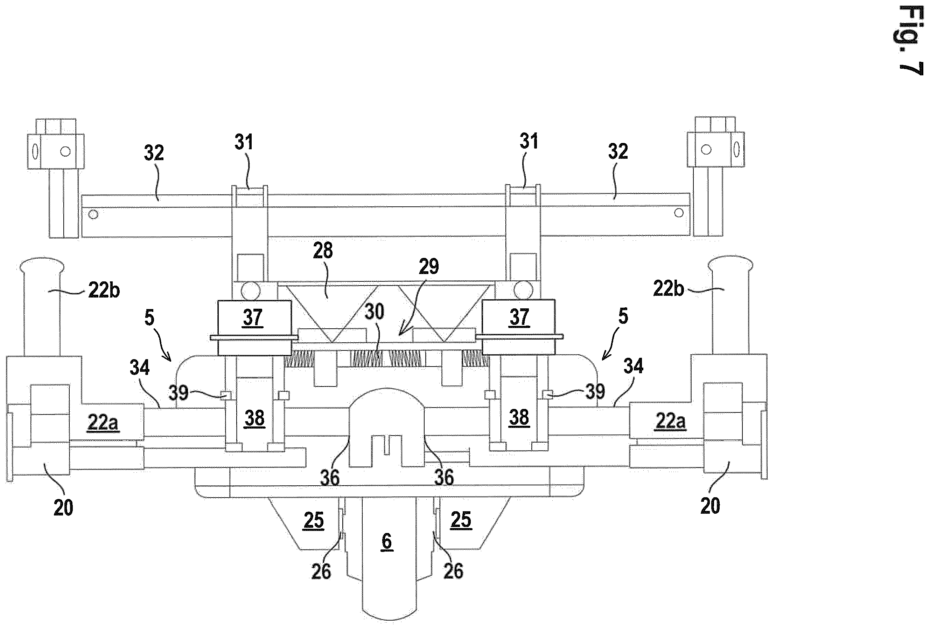

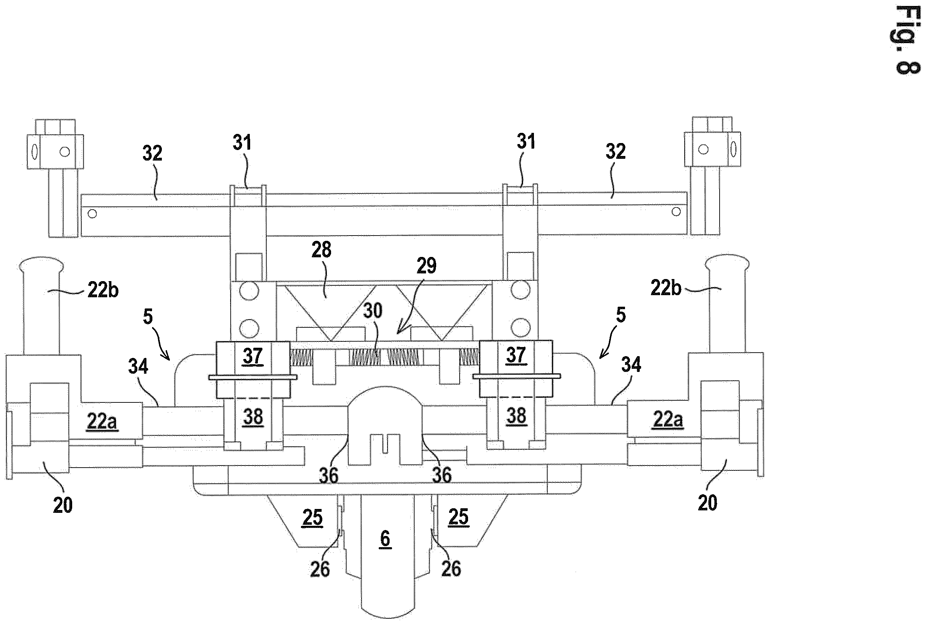

Die Figuren 7 und 8 zeigen eine Variante der Anordnungen der Figuren 5 und 6.

Anstelle der mit Kipphebeln 35 fixierbaren Kopplungsmittel 33 sind im vorliegenden Fall zwei Schieber 37 vorgesehen, die jeweils in einer T-Nut 38 verschiebbar gelagert sind.

Figur 7 zeigt die Schieber 37 in einer Endposition, die einer Lösestellung der Schieber 37 entspricht. Die Schieber 37 sind dort mittels mechanischer Anschläge oder dergleichen gegen ein Herauslösen aus der jeweiligen T-Nut 38 gesichert.

Zur Fixierung am Handwagen 2 werden die Schieber 37 in ihre zweite Endposition in der jeweiligen T-Nut 38 verschoben, wobei die zweite Endposition eine Verriegelungsposition ist. Die Schieber 37 sind in ihrer zweiten Endposition durch Rastmittel 39 gesichert (Figur 8).

### Bezugszeichenliste

- (1): Anordnung
- (2): Handwagen
- (2a): Rad
- (3): Antriebseinheit
- (4): spritzwasserdichte Wanne
- (5): Trittbrett
- (6): angetriebenes Rad
- (7): elektrischer Antrieb
- (8): Steuereinheit
- (9): Akkumulator
- (10): Anschlussmittel
- (11): Bedieneinheit
- (12): Betriebsbremse
- (13): Scheibenbremse
- (14): Bremsmodul
- (15a): Bedienelement
- (15b): Bedienelement
- (16): Bowdenzug
- (17): Gelenkmechanismus
- (18): Aufnahme
- (19): Bremsscheibe
- (20): Bremshalter
- (21): Bremssattel
- (22a): Führungskomponente
- (22b): Führungskomponente
- (23): Nabe
- (24): Speiche
- (25): Lagerelement
- (26): Welle
- (27): mechanische Schnittstelle
- (28): Platte
- (29): Gelenkverbindung
- (30): Federelement
- (31): Gleitführung
- (32): Querträger
- (33): Kopplungsmittel
- (34): Achse
- (35): Kipphebel
- (36): Fusspedal
- (37): Schieber
- (38): T-Nut
- (39): Rastmittel

## Patentansprüche

1. Anordnung (1) mit einem Handwagen (2) und mit einer Antriebseinheit (3), die wenigstens ein mit einem elektrischen Antrieb (7) angetriebenes Rad (6) und eine mechanische Schnittstelle (27), die zur Verbindung mit dem Handwagen (2) ausgebildet ist, aufweist, **dadurch gekennzeichnet, dass** der elektrische Antrieb (7) in einer spritzwasserdichten Wanne (4) gelagert ist, deren offene Oberseite mit einem Trittbrett (5) spritzwasserdicht abgeschlossen ist, dass die spritzwasserdichte Wanne (4) Aufnahmen (18) für eine Drehlagerung des angetriebenen Rads (6) aufweist, und dass eine Betriebsbremse (12) vorhanden ist.

2. Anordnung (1) nach Anspruch 1, **dadurch gekennzeichnet, dass** der Handwagen (2) ein Bollerwagen oder ein Kinderwagen ist.

3. Anordnung (1) nach einem der Ansprüche 1 oder 2, **dadurch gekennzeichnet, dass** in der spritzwasserdichten Wanne (4) eine Steuereinheit (8) für den elektrischen Antrieb (7) vorhanden ist.

4. Anordnung (1) nach Anspruch 3, **dadurch gekennzeichnet, dass** die Steuereinheit (8) über leitungsgebundene Anschlussmittel (10) mit einer Bedieneinheit (11) verbunden ist, wobei die Bedieneinheit (11) zur Eingabe von Steuerbefehlen für den elektrischen Antrieb (7) ausgebildet ist.

5. Anordnung (1) nach einem der Ansprüche 1 bis 4, **dadurch gekennzeichnet, dass** in der spritzwasserdichten Wanne (4) eine autarke Energieversorgung vorhanden ist.

6. Anordnung (1) nach einem der Ansprüche 1 bis 5, **dadurch gekennzeichnet, dass** die Betriebsbremse (12) eine mechanische Bremse ist.

7. Anordnung (1) nach einem der Ansprüche 1 bis 6, **dadurch gekennzeichnet, dass** an zwei nicht angetriebenen Rädern (2a) des Handwagens (2) jeweils eine Scheibenbremse (13) angeordnet ist, die Bestandteil der Betriebsbremse (12) ist.

8. Anordnung (1) nach einem der Ansprüche 1 bis 7, **dadurch gekennzeichnet, dass** die Betriebsbremse (12) ein Bremsmodul (14) mit Bedienelementen (15a, 15b) aufweist.

9. Anordnung (1) nach einem der Ansprüche 1 bis 8, **dadurch gekennzeichnet, dass** die Betriebsbremse (12) eine von Antriebsmitteln der Antriebseinheit (3) unabhängige Einheit ist.

10. Anordnung (1) nach einem der Ansprüche 7 und 8, **dadurch gekennzeichnet, dass** das Bremsmodul (14) über jeweils einen Bowdenzug (16) mit den Scheibenbremsen (13) verbunden ist.

11. Anordnung (1) nach einem der Ansprüche 8 bis 10, **dadurch gekennzeichnet, dass** ein erstes Bedienelement (15a) zur Betätigung der Scheibenbremsen (13) ausgebildet ist.

12. Anordnung (1) nach einem der Ansprüche 8 bis 11, **dadurch gekennzeichnet, dass** ein zweites Bedienelement (15b) zur Arretierung von Bremsstellungen der Scheibenbremsen (13) ausgebildet ist.

13. Anordnung (1) nach einem der Ansprüche 1 bis 12, **dadurch gekennzeichnet, dass** die mechanische Schnittstelle (27) zwei Kopplungsmittel (33) aufweist, die an einer feststehenden Achse (34) des Handwagens (2) montierbar sind.

14. Anordnung (1) nach einem der Ansprüche 1 bis 13, **dadurch gekennzeichnet, dass** die mechanische Schnittstelle (27) eine mit der spritzwasserdichten Wanne (4) gelenkig verbundene Platte (28) aufweist, die mittels einer Gleitführung (31) an einen Querträger (32) des Handwagens (2) ankoppelbar ist.

15. Anordnung (1) nach Anspruch 14, **dadurch gekennzeichnet, dass** die spritzwasserdichte Wanne (4) mittels einer federnden Gelenkverbindung (29) mit der Platte (28) verbunden ist.
